# EUROPEAN PATENT SPECIFICATION

(11) **EP 4 199 792 B1**
(45) Date of publication and mention of the grant of the patent: **08.10.2025**
(21) Application number: 21858727.7
(22) Date of filing: 07.07.2021
(51) Int. Cl.: A47J 27/04, F24C 14/00, F24C 15/32

(54) **A CONTROL METHOD FOR AN OVEN**
STEUERUNGSVERFAHREN FÜR EINEN OFEN
PROCÉDÉ DE COMMANDE POUR UN FOUR

(30) Priority: 20.08.2020 TR 202013196
(43) Date of publication of application: 28.06.2023
(73) Proprietor: Arçelik Anonim Sirketi, 34445 Istanbul (TR)
(72) Inventor: GÜMÜSSOY SENGÜL, Eda, 34445 Istanbul (TR); SERABATIR, Davut Ayhan, 34445 Istanbul (TR); ÇAKMAK, Mehmet, 34445 Istanbul (TR); ÇETINKAYA, Veysel Ertan, 34445 Istanbul (TR); BILGIÇ, Alper, 34445 Istanbul (TR)
(86) International application number: PCT/TR2021/050695
(87) International publication number: WO 2022/039694

(56) References cited:
- EP-B1- 1 557 612
- EP-B1- 2 966 364
- CN-A- 108 903 612
- CN-A- 109 805 741
- CN-U- 202 476 382
- US-A1- 2012 199 110

## Description

The present invention relates to a control method suitable to be used in ovens wherein a more efficient hygiene is provided by means of a steam generator.

As health-related sensitivities increase, the importance of devices with disinfection feature for the user increases day by day. It becomes the first priority for users who buy an oven with disinfection feature, especially in order to make viruses and bacteria harmless by means of steam and heat, and to make objects hygienic. In order to make viruses and bacteria harmless at certain temperatures, it is necessary to transfer heat quickly to these organisms which are on objects. Due to the low heat transfer coefficient of hot air or superheated steam, one of the methods of transferring the most thermal energy is the use of saturated steam with 100% relative humidity. Pressure vessels (autoclaves), insulated bodies or vacuum pumps are known in the art, but these types of devices have very high costs due to their complex structure. Therefore, the user needs the performance of an effective disinfection without requiring additional expenses in a standard household or industrial oven using steam and heat. The main problem encountered is that although high-performance disinfection devices are very complex and expensive, the household appliances cannot provide effective hygiene. To overcome these problems, many expensive additional parts such as volume pressurization means, chimney shutter, level sensor which determines the water level in the steam generator are needed. This situation adversely affects the user-friendliness of the products and the ex-factory cost of the products. In addition, providing the high pressure required for disinfection at relatively low temperatures (≤100 C) or the low pressure required at high temperatures (≥100 C) in the same volume, especially in household appliances such as ovens, requires very expensive and complex processes. Therefore, the disinfection requirement for objects which are not resistant to high temperatures cannot be met for the user.

In the state of the art Chinese Patent Document No. CN104873991, a control method is disclosed, which is used in a disinfection device comprising a heater, a fan and a steam generator, for objects which are difficult to disinfect and dry. Other relevant prior art is found in EP1557612 B1, EP2966364 B1, CN108903612 A and US2012/199110 A1.

The aim of the present invention is to provide efficient hygiene by means of a control method suitable to be used in an oven comprising a steam generator and wherein heat control is performed.

The control method realized in order to attain the aim of the present invention, explicated in the claims, is suitable to be used in an oven comprising a body; a disinfection section which is disposed in the body; a temperature sensor which measures the dry and wet thermometer temperatures in the disinfection section; a water tank which is disposed in the body; a steam generator having a generator heater for converting the water to steam; a delivery line for transferring the water in the water tank to the steam generator; a valve which is disposed on the delivery line; at least one steam nozzle which transfers the steam to the disinfection section; at least one fan which is positioned in the disinfection section and which provides the air flow; at least one heater which is disposed in the disinfection section and which provides heating; and a control unit which provides the humidity, temperature and disinfection program control for the disinfection section. In the steps of the control method executed by the control unit, first the disinfection program is started. The heater and the fan are operated together so as to heat the disinfection section to a predetermined temperature (T), and then the heater is stopped. By operating the heater and the fan together, a quick heating relative to heating only with steam is provided, and no condensation forms in the disinfection volume. Before the disinfection section reaches the T temperature, the valve is opened and closed such that the water is transferred from the water tank to the steam generator by means of the delivery line in the predetermined time (t), and thus the operation of the generator heater is realized. The steam generated in the steam generator with the water heated is enabled to be delivered into the disinfection section by means of the steam nozzles. As a result of continuously operating the generator heater until the dry and wet thermometer temperatures measured by the temperature sensor in the disinfection section are equalized, the temperature is continuously increased so as to increase the relative humidity level inside. When the dry and wet thermometer temperatures in the disinfection section are equalized during the disinfection program, the relative humidity reaches 100%, and becomes saturated. By keeping the valve open so as to supplement the decreased water amount to transfer water to the steam generator by means of the delivery line, the steam generator is enabled to keep the humidity saturation constant in the disinfection section. By means of this method, the wet and dry thermometer temperatures are brought to the same level in the shortest time possible. Sensitive objects are made hygienic in an unpressurized volume by reaching 100% relative humidity conditions with a very high heat transmission coefficient, especially for objects which need disinfection at low temperatures. Moreover, by means of this method, the disinfection process is performed without cost-increasing factors such as pressurization of the disinfection section, chimney shutter or level sensor which determines the water level in the generator. In particular, the need for additional components is eliminated by opening and closing the valve at predetermined times instead of using a level sensor for measuring the liquid level and adding the decreasing water.

In an embodiment of the present invention, the control method comprises the step of closing the valve and operating the generator heater before reaching the T temperature during the disinfection program or opening the valve and stopping the generator heater. Thus, the control method, which depends on the times for the water transfer and the steam generation process afterwards, becomes more stable.

In a different embodiment of the present invention, the control method comprises the step of drying the disinfection section by using the amount determined by the producer of the total power of the heaters which heat the disinfection section after the disinfection program is completed. Thus, the condensation on the disinfected objects is minimized by means of drying and the effect of the steam in the body is eliminated.

In a different embodiment of the present invention, the control method comprises the step of continuing to operate the heater when the dry and wet thermometer temperatures are equalized so as to exceed the predetermined temperature (T) and continuing to operate heater for a predetermined time. By using high temperatures and lower amount of steam especially at the disinfection programs with high temperatures over 100 centigrade degrees, higher temperatures can be reached during the disinfection process by means of a separate program or a hybrid program. Thus, a better hygiene performance is provided.

Another embodiment of the present invention is an oven suitable to be used with the above-described control method. Especially with the steam ovens wherein this algorithm is applied, a low-cost solution is offered without any performance loss.

With the control method of the present invention, a cost-efficient solution is provided by means of steam and temperature adjustment in the ovens.

An oven suitable to be used with the control method realized in order to attain the aim of the present invention is illustrated in the attached figures, where:

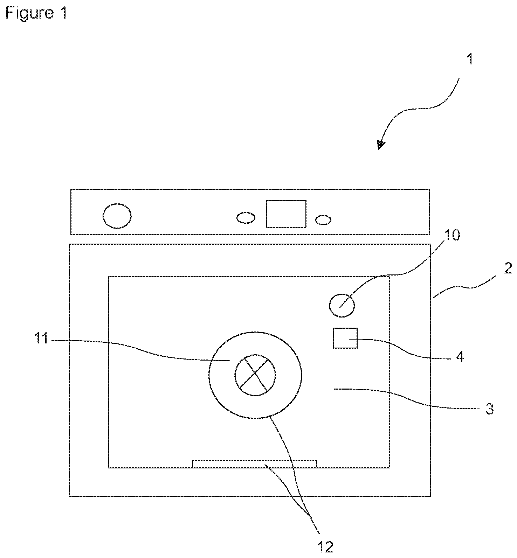

Figure 1 - is the front schematic view of the oven.

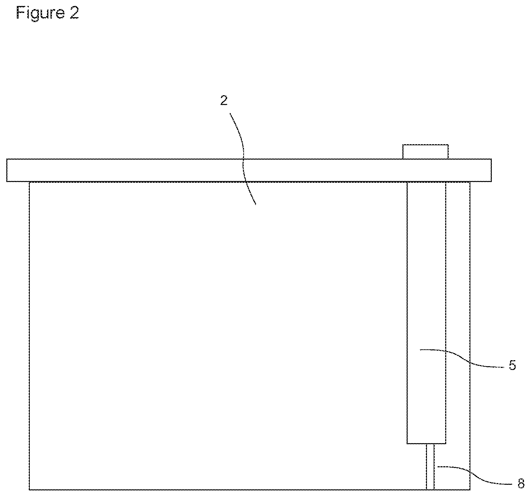

Figure 2 - is the top schematic view of the oven.

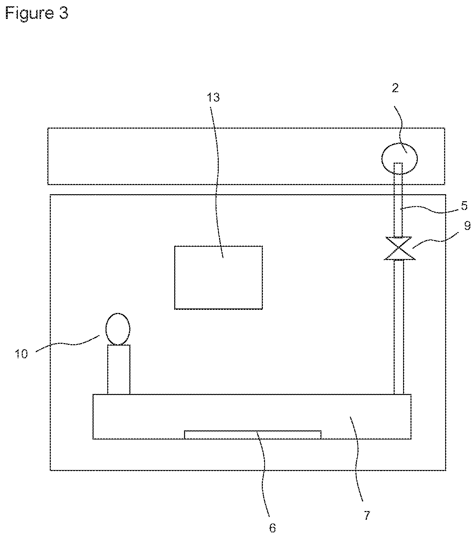

Figure 3 - is the rear schematic view of the oven.

The elements illustrated in the figures are numbered as follows:
1. Oven
2. Body
3. Disinfection section
4. Temperature sensor
5. Water tank
6. Generator heater
7. Steam generator
8. Delivery line
9. Valve
10. Steam nozzle
11. Fan
12. Heater
13. Control unit

By means of the control method of the present invention, a disinfection process is provided, offering cost advantage without any performance loss.

The control method is suitable to be used in an oven (1) comprising a body (2); a disinfection section (3) which is disposed in the body (2); a temperature sensor (4) which measures the dry and wet thermometer temperatures in the disinfection section (3); a water tank (5) which is disposed in the body (2); a steam generator (7) having a generator heater (6) for converting the water to steam; a delivery line (8) for transferring the water in the water tank (5) to the steam generator (7); a valve (9) which is disposed on the delivery line (8); at least one steam nozzle (10) which transfers the steam to the disinfection section (3); at least one fan (11) which is positioned in the disinfection section (3) and which provides the air flow; at least one heater (12) which is disposed in the disinfection section (3) and which provides heating; and a control unit (13) which provides the humidity, temperature and disinfection program control for the disinfection section (3). In the steps of the control method executed by the control unit (13), first the disinfection program is started. The heater (12) and the fan (11) are operated together so as to heat the disinfection section (3) to a predetermined temperature (T), and then the heater (12) is stopped. By operating the heater (12) and the fan (11) together, a quick heating relative to heating only with steam is provided, and no condensation forms in the disinfection volume (3). Before the disinfection section (3) reaches the predetermined temperature (T), the valve (9) is opened and closed such that the water is transferred from the water tank (5) to the steam generator (7) by means of the delivery line (8) in the predetermined time (t), and thus the operation of the generator heater (6) is realized. The steam generated in the steam generator (7) with the water heated is enabled to be delivered into the disinfection section (3) by means of the steam nozzles (10). As a result of continuously operating the generator heater (6) until the dry and wet thermometer temperatures measured by the temperature sensor (4) in the disinfection section (3) are equalized, the temperature is continuously increased so as to increase the relative humidity level inside. When the dry and wet thermometer temperatures are equalized during the disinfection program, the relative humidity reaches 100%. By keeping the valve (9) open so as to supplement the decreased water amount to transfer water to the steam generator (7) by means of the delivery line (8), the steam generator (7) is enabled to keep the humidity saturation constant in the disinfection section (3). The amount of water to be transferred from the water tank (5) is determined by the producer depending on the open time of the valve (9). By means of this method, the wet and dry thermometer temperatures are brought to the same level in the shortest time possible, and sensitive objects are made hygienic in an unpressurized volume by reaching 100% relative humidity conditions with a very high heat transmission coefficient, especially for objects which need disinfection at low temperatures. Moreover, by means of this method, the disinfection process is performed without cost-increasing factors such as pressurization of the disinfection section (3), chimney shutter or level sensor which determines the water level in the generator. In particular, the amount of water is controlled by opening and closing the valve (9) at predetermined times by means of the control unit (13) instead of using a level sensor for measuring the liquid level and adding the decreasing water. In short, the need for an additional component is eliminated.

In an embodiment of the present invention, the control method comprises the step of closing the valve (9) and operating the generator heater (6) before reaching the predetermined temperature (T) during the disinfection program or opening the valve (9) and stopping the generator heater (6). In other words, the steam generation and water transfer are intermittently performed. Thus, the control method, which depends on the times for the water transfer and the steam generation process afterwards, becomes more stable. By eliminating both situations where steam is generated and water is transferred, the steam generation time connected to the generator heater (6) and the water transfer time connected to the valve (9) can be used as reliable data by the control unit (13) to supplement the amount of water decreased.

In a different embodiment of the present invention, the control method comprises the step of drying the disinfection section (3) by using the amount determined by the producer of the total power of the heater (12) which heat the disinfection section (3) after the disinfection program is completed. A faster and more efficient drying is ensured, provided that the power level estimated here is preferably more than half of the total power of the heater (12). Thus, the condensation on the disinfected objects is minimized by means of drying and the effect of the steam in the body (2) is eliminated.

In a different embodiment of the present invention, the control method comprises the step of continuing to operate the heater (12) when the dry and wet thermometer temperatures are equalized so as to exceed the predetermined temperature (T) and continuing to operate heater (12) for a predetermined time. By using high temperatures and lower amount of steam especially at the disinfection programs with high temperatures over 100 centigrade degrees, higher temperatures can be reached during the disinfection process by means of a separate program or a hybrid program. Thus, a better hygiene performance is provided. In addition, the disinfection process becomes possible in a shorter time by using lower relative humidity and higher temperature.

Another embodiment of the present invention is an oven (1) suitable to be used with the above-described control method. It is advantageous for the user as a very low cost and efficient method, especially for steam ovens.

The control method of the invention provides performance and cost improvement in the ovens (1) by regulating the steam and temperature setting without the need for additional components.

## Claims

1. A control method which is suitable to be used in an oven (1) comprising a body (2); a disinfection section (3) which is disposed in the body (2); a temperature sensor (4) which measures the dry and wet thermometer temperatures in the disinfection section (3); a water tank (5) which is disposed in the body (2); a steam generator (7) having a generator heater (6) for converting the water to steam; a delivery line (8) for transferring the water in the water tank (5) to the steam generator (7); a valve (9) which is disposed on the delivery line (8); at least one steam nozzle (10) which transfers the steam to the disinfection section (3); at least one fan (11) which is positioned in the disinfection section (3) and which provides the air flow; at least one heater (12) which is disposed in the disinfection section (3) and which provides heating; and a control unit (13) which provides the humidity, temperature and disinfection program control for the disinfection section (3), wherein the need for additional components is eliminated by opening and closing the valve at predetermined times instead of using a level sensor for measuring the liquid level and adding the decreasing water, comprising the steps, executed by the control unit, of
- Starting the disinfection program,
- Operating the heater (12) and the fan (11) together so as to heat the disinfection section (3) to a predetermined temperature (T), and then stopping the heater (12),
- Opening and closing the valve (9) before the disinfection section (3) reaches the predetermined temperature (T) such that the water is transferred from the water tank (5) to the steam generator (7) by means of the delivery line (8) in the predetermined time (t), and thus operating the generator heater (6),
- Delivering the steam generated in the steam generator (7) into the disinfection section (3) by means of the steam nozzles (10),
- continuously operating the generator heater (6) until the dry and wet thermometer temperatures measured by the temperature sensor (4) in the disinfection section (3) are equalized,
- Keeping the valve (9) open so as to deliver the water to the steam generator (7) by means of the delivery line (8) and supplement the amount of water decreased when the dry and wet thermometer temperatures are equalized during the disinfection program.

2. A control method as in Claim 1, comprising the step of closing the valve (9) and operating the generator heater (6) before reaching the predetermined temperature (T) during the disinfection program or opening the valve (9) and stopping the generator heater (6), such that the steam generation and water transfer are intermittently performed.

3. A control method as in Claim 1 or 2, comprising the step of drying the disinfection section (3) by using the heater (12) which heat the disinfection section (3) at the power determined by the producer after the disinfection program is completed.

4. A control method as in any one of the above claims, comprising the step of continuing to operate the heater (12) when the dry and wet thermometer temperatures are equalized so as to exceed the predetermined temperature (T) and continuing to operate heater (12) for a predetermined time.

5. An oven (1) for carrying out the method of any of claims 1 to 4, comprising a body, a disinfection section, a temperature sensor, a steam generator having a generator heater, at least one steam nozzle, at least one fan, at least one heater disposed in the disinfection section, **characterized by** a water tank, a delivery line, a valve and a control unit configured to carry out the steps of claims 1 to 4.

## Patentansprüche

1. Ein Steuerungsverfahren, das zur Verwendung in einem Ofen (1) geeignet ist, umfasst einen Körper (2); einen Desinfektionsabschnitt (3), der in dem Körper (2) angeordnet ist; einen Temperatursensor (4), der die Trocken- und Feuchtthermometertemperaturen in dem Desinfektionsabschnitt (3) misst; einen Wassertank (5), der in dem Körper (2) angeordnet ist; einen Dampferzeuger (7) mit einer Generatorheizung (6) zum Umwandeln des Wassers in Dampf; eine Zufuhrleitung (8) zum Befördern des Wassers im Wassertank (5) zum Dampferzeuger (7); ein Ventil (9), das in der Zufuhrleitung (8) angeordnet ist; mindestens eine Dampfdüse (10), die den Dampf zum Desinfektionsabschnitt (3) befördert; mindestens einen Ventilator (11), der in der Desinfektionssektion (3) positioniert ist und den Luftstrom erzeugt; mindestens eine Heizung (12), die in der Desinfektionssektion (3) angeordnet ist und für die Beheizung sorgt; und eine Steuereinheit (13), die die Steuerung der Feuchtigkeit, Temperatur und des Desinfektionsprogramms für die Desinfektionssektion (3) übernimmt, mit den folgenden, von der Steuereinheit ausgeführten Schritten:
- Starten des Desinfektionsprogramms,
- Gleichzeitiges Betreiben der Heizung (12) und des Ventilators (11), um den Desinfektionsbereich (3) auf eine vorgegebene Temperatur (T) zu erwärmen, und anschließendes Abschalten der Heizung (12),
- Öffnen und Schließen des Ventils (9), bevor der Desinfektionsabschnitt (3) die Temperatur T erreicht, so dass das Wasser innerhalb der vorgegebenen Zeit (t) über die Zufuhrleitung (8) aus dem Wassertank (5) in den Dampferzeuger (7) geleitet wird, und somit Betreiben der Generatorheizung (6),
- den im Dampferzeuger (7) erzeugten Dampf mittels der Dampfdüsen (10) in den Desinfektionsabschnitt (3) zu leiten,
- die Generatorheizung (6) fortlaufend zu betreiben, bis die vom Temperatursensor (4) im Desinfektionsabschnitt (3) gemessenen Trocken- und Feuchtthermometertemperaturen ausgeglichen sind,
- Das Ventil (9) offen halten, um das Wasser über die Zufuhrleitung (8) zum Dampfgenerator (7) zuzuführen und die während des Desinfektionsprogramms bei Ausgleich der Trocken- und Feuchtthermometertemperaturen verringerte Wassermenge zu ergänzen.

2. Ein Steuerungsverfahren, wie in Anspruch 1 aufgeführt, umfasst den Schritt des Schließens des Ventils (9) und des Betriebs der Generatorheizung (6) vor Erreichen der Temperatur T während des Desinfektionsprogramms oder des Öffnens des Ventils (9) und des Anhaltens der Generatorheizung (6).

3. Ein Steuerungsverfahren, wie in Anspruch 1 oder 2 aufgeführt, umfasst den Schritt des Trocknens des Desinfektionsabschnitts (3) unter Verwendung der Heizelemente (12), die den Desinfektionsabschnitt (3) mit der vom Hersteller festgelegten Leistung nach Abschluss des Desinfektionsprogramms erwärmen.

4. Ein Steuerungsverfahren, wie in einem der vorherigen Ansprüchen aufgeführt, umfasst den Schritt, den Heizer (12) weiter zu betreiben, wenn die Trocken- und Feuchtthermometertemperaturen ausgeglichen sind, so dass sie die vorbestimmte Temperatur (T) überschreiten, und den Heizer (12) für eine vorbestimmte Zeit weiter zu betreiben.

5. Ein Ofen (1), der zur Durchführung der Schritte gemäß Anspruch 1 bis 4 konfiguriert ist, umfasst einen Körper, einen Desinfektionsabschnitt, einen Temperatursensor, einen Wassertank, einen Dampferzeuger mit einer Erzeugerheizung, eine Zufuhrleitung, ein Ventil, mindestens eine Dampfdüse, mindestens einen Ventilator, mindestens eine im Desinfektionsabschnitt angeordnete Heizung und eine Steuereinheit.

## Revendications

1. Procédé de contrôle adapté pour être utilisé dans un four (1) comprenant un corps (2) ; une section de désinfection (3) disposée dans le corps (2) ; un capteur de température (4) qui mesure les températures des thermomètres sec et humide dans la section de désinfection (3) ; un réservoir d'eau (5) disposé dans le corp (2) ; un générateur de vapeur (7) comportant un élément chauffant de générateur (6) pour convertir l'eau en vapeur ; une conduite de transfert (8) pour acheminer l'eau du réservoir d'eau (5) au générateur de vapeur (7) ; une vanne (9) disposée sur la conduite de transfert (8) ; au moins une buse de vapeur (10) qui transfère la vapeur à la section de désinfection (3) ; au moins un ventilateur (11) positionné dans la section de désinfection (3) et qui assure le flux d'air ; au moins un élément de chauffage (12) dans la section de désinfection (3) et qui fournit le chauffage ; et une unité de contrôle (13) qui gère le contrôle de l'humidité, de la température et du programme de désinfection pour la section de désinfection (3), comprenant les étapes, exécutées par l'unité de contrôle, de :
- Démarrer le programme de désinfection.
- Faire fonctionner l'élément de chauffage (12) et le ventilateur (11) ensemble afin de chauffer la section de désinfection (3) à une température prédéterminée (T), puis arrêter l'élément de chauffage (12).
- Ouvrir et fermer la vanne (9) avant que la section de désinfection (3) n'atteigne la température T, de sorte que l'eau soit transférée du réservoir d'eau (5) au générateur de vapeur (7) par la conduite de transfert (8) dans le temps prédéterminé (t), et ainsi faire fonctionner l'élément de chauffage du générateur (6).
- Acheminer la vapeur générée dans le générateur de vapeur (7) dans la section de désinfection (3) par les buses de vapeur (10).
- Faire fonctionner en continu l'élément de chauffage du générateur (6) jusqu'à ce que les températures des thermomètres sec et humide mesurées par le capteur de température (4) dans la section de désinfection (3) soient égales.
- Maintenir la vanne (9) ouverte afin de fournir de l'eau au générateur de vapeur (7) par la conduite de transfert (8) et compenser la quantité d'eau diminuée lorsque les températures des thermomètres sec et humide sont égalisées pendant le programme de désinfection.

2. Un procédé de contrôle selon la revendication 1, comprenant l'étape de fermer la vanne (9) et de faire fonctionner l'élément de chauffage du générateur (6) avant d'atteindre la température T pendant le programme de désinfection ou d'ouvrir la vanne (9) et d'arrêter l'élément de chauffage du générateur (6).

3. Un procédé de contrôle selon la revendication 1 ou 2, comprenant l'étape de séchage de la section de désinfection (3) en utilisant les éléments de chauffage (12) qui chauffent la section de désinfection (3) à la puissance déterminée par le fabricant après la fin du programme de désinfection.

4. Un procédé de contrôle selon l'une quelconque des revendications précédentes, comprenant l'étape de continuer à faire fonctionner l'élément de chauffage (12) lorsque les températures des thermomètres sec et humide sont égalisées afin de dépasser la température prédéterminée (T) et de continuer à faire fonctionner l'élément de chauffage (12) pendant un temps prédéterminé.

5. Un four (1) configuré pour exécuter les étapes des revendications 1 à 4 comprend un corps, une section de désinfection, un capteur de température, un réservoir d'eau, un générateur de vapeur comprenant d'un élément de chauffage du générateur, une conduite de transfert, une vanne, au moins une buse de vapeur, au moins un ventilateur, au moins un élément de chauffage disposé dans la section de désinfection et une unité de contrôle.
